# EUROPÄISCHE PATENTSCHRIFT

(11) **EP 3 540 632 B1**
(45) Veröffentlichungstag und Bekanntmachung des Hinweises auf die Patenterteilung: **26.04.2023**
(21) Anmeldenummer: 18162285.3
(22) Anmeldetag: 16.03.2018
(51) Int. Cl.: G06V 10/10, G06V 10/44, G06V 10/764, G06V 10/776, G06V 10/82, G06V 20/69, G06T 7/00

(54) **VERFAHREN ZUM KLASSIFIZIEREN VON GEWEBEPROBEN**
METHOD FOR CLASSIFYING TISSUE SAMPLES
PROCÉDÉ POUR LA CLASSIFICATION DES ÉCHANTILLONS TISSULAIRES

(43) Veröffentlichungstag der Anmeldung: 18.09.2019
(73) Patentinhaber: Siemens Healthcare GmbH, 91052 Erlangen (DE)
(72) Erfinder: Pfister, Marcus, 91088 Bubenreuth (DE)

(56) Entgegenhaltungen:
- WO-A1-2017/103196
- WO-A1-2018/060243
- US-A1- 2012 282 648
- US-A1- 2015 317 509

## Beschreibung

Die Erfindung betrifft ein Verfahren zum Klassifizieren von Gewebeproben hinsichtlich mindestens einer Eigenschaft. Die Gewebeproben werden also entsprechend klassifiziert, je nachdem, ob sie die Eigenschaft aufweisen oder nicht. Ein Anwendungsbereich der vorliegenden Erfindung ist beispielsweise eine Erkennung von Tumorgrenzen.

Es ist heutzutage ein weitverbreitetes Vorgehen, krankhafte Gewebeteile oder Gewebebereiche eines Patienten medizinisch zu entfernen. Dabei stellt sich jedoch für den behandelnden Arzt die Problematik, die Grenzen des jeweiligen betroffenen Gewebebereiches zu finden. Idealerweise würde nur betroffenes oder erkranktes Gewebe entfernt. Gerade bei Tumoren ist es jedoch von besonderer Wichtigkeit, dass diese vollständig entfernt werden. Daher wird heutzutage üblicherweise eine Sicherheitszone um den Tumor oder den betroffenen Gewebebereiches herum vorgesehen und sämtliches innerhalb dieser Sicherheitszone liegendes Gewebe entfernt. Dabei wird nachteilig auch ein signifikanter Anteil von gesundem Gewebe entfernt.

Im Artikel "Deep Learning as a tool for increased accuracy and efficiency of histological diagnosis", Sci. Rep. 6, 26286 von Geert Litjens et al.; doi: 10.1038/srep26286 (2016) wird die Anwendung eines neuronalen Netzes zur Prostata- und Brustkrebsdiagnose untersucht.

Dokument WO 2018/060243 A1 beschreibt Verfahren zum Ermitteln eines Gewebetyps eines Gewebes, bei dem durch eine Gewebeprobe des Gewebes abgegebene elektromagnetische Strahlung mittels eines Strahlungssensors erfasst wird. Dazu werden Trainingsdatensätze unter Nutzung von Gewebeproben bereitgestellt, beispielsweise gesundes sowie auch Tumorgewebe. Es erfolgt eine Analyse und Validierung der Trainingsdatensätze, vorzugsweise auch von dem gleichen Individuum aufgenommen.

Eine selbstlernende Auswerteeinheit, die entsprechend trainiert wurde, ermittelt einen Gewebetyp einer Gewebeprobe. Dokument US 2015/0317509 A1 beschreibt ein Verfahren zur automatischen Gewebeanalyse. In einem Lernmodus wählt ein Benutzer mehrere Bereiche von Interesse aus, die beispielsweise anormale Zellen enthalten, sowie wenigstens einen Bereich, der nicht von Interesse ist und beispielsweise gesunde Zellen enthält. Basierend auf einer entsprechenden Klassifizierung wird eine Datenbank erzeugt und ein Klassifizierungsalgorithmus trainiert. In einem Produktivmodus wird ein Bild von Bauchspeicheldrüsengewebe anhand eines im Lernmodus basierend auf einer Bauchspeicheldrüsendatenbank trainierten Klassifizierungsalgorithmus klassifiziert.

Dokument US 2012/0282648 A1 beschreibt ein Verfahren, bei dem Gewebeproben auf eine Zink-Konzentration hin untersucht werden. Aus den Zink-Konzentrationen der Gewebeproben-Entnahmeorte können Konzentrations-Profile abgeleitet werden, anhand derer wiederum weitere mögliche Entnahmeorte ermittelt werden können.

Dokument WO 2017/103196 A1 beschreibt ein Verfahren zur Charakterisierung von Gewebe mittels Ultraschall. Das Verfahren soll an den jeweiligen Patienten individuell angepasst werden, um Sensitivität und Genauigkeit zu verbessern. Hierzu wird ein patienten-individuelles Gewebe-Modell erstellt. Aufgabe der vorliegenden Erfindung ist es, eine gegenüber dem Stand der Technik zuverlässigere Gewebeklassifikation zu ermöglichen.

Diese Aufgabe wird erfindungsgemäß durch den Gegenstand des Anspruchs 1 gelöst. Vorteilhafte Ausgestaltungen und Weiterbildungen der Erfindung sind in den abhängigen Patentansprüchen sowie in der Beschreibung und in den Zeichnungen angegeben.

Ein erfindungsgemäßes Verfahren dient zum Klassifizieren von Gewebeproben. Eine Gewebeprobe in diesem Sinne ist dabei biologisches Material, insbesondere umfassend eine oder mehrere Zellen, welches aus einem Körper, beispielsweise eines Patienten, entnommen worden ist. Bei dem Verfahren werden aus wenigstens einer bekannt positiven Gewebeprobe, die eine vorgegebene Eigenschaft aufweist, und wenigstens einer bekannt negativen Gewebeprobe, die die vorgegebene Eigenschaft nicht aufweist, annotierte Trainingsdaten erzeugt. Die positiven und negativen Gewebeproben stammen dabei von ein und demselben Patienten. Die annotierten Trainingsdaten werden dann einem automatischen Klassifikator bereitgestellt.

Annotierte Trainingsdaten sind dabei solche Trainingsdaten, die mit einer Markierung, einer Beschreibung oder einem Label versehen sind, wodurch explizit angegeben ist, ob die den jeweiligen Trainingsdaten zugrunde liegende Gewebeprobe die vorgegebene Eigenschaft aufweist oder nicht. Die Trainingsdaten können dabei die Gewebeproben selbst sein oder umfassen. Ebenso können die Trainingsdaten jedoch durch einen oder mehrere Verarbeitungsschritte aus den Gewebeproben erzeugt oder gewonnen werden. Dies kann beispielsweise ein Präparieren, ein Einfärben, ein - beispielsweise chemisches oder physikalisches - Aufbereiten, ein - beispielsweise optisches - Erfassen, Ablichten oder Scannen, und/oder dergleichen mehr umfassen oder bedeuten. Die annotierten Trainingsdaten können also rein elektronischer Natur sein aber ebenso gut physische Objekte umfassen. Beispielsweise kann zum Erzeugen der annotierten Trainingsdaten eine Gewebeprobe chemisch präpariert und auf einem Objektträger für eine mikroskopische Erfassung angeordnet und in einem zugeordneten Eingabe- oder Datenfeld oder einer zugeordneten Datenbank eine entsprechende positive oder negative Annotation eingetragen werden.

Erfindungsgemäß ist es vorgesehen, dass der Klassifikator anhand der annotierten Trainingsdaten patientenspezifisch für denselben Patienten, von dem die bekannt positiven und negativen Gewebeproben stammen, darauf trainiert wird, zu erkennen, ob eine Gewebeprobe dieses Patienten die vorgegebene Eigenschaft aufweist. Zum Eingrenzen eines von der vorgegebenen Eigenschaft betroffenen Gewebebereiches werden aus mehreren ebenfalls von demselben Patienten, von dem die bekannten Gewebeproben stammen, stammenden unbekannten Gewebeproben Eingangsdaten für den Klassifikator erzeugt. Die unbekannten Gewebeproben sind dabei solche Gewebeproben, von denen vor ihrer Klassifizierung durch den Klassifikator nicht bekannt ist, ob sie die vorgegebene Eigenschaft aufweisen. Die unbekannten Gewebeproben werden anhand der aus diesen erzeugten Eingangsdaten dann mittels des Klassifikators hinsichtlich der vorgegebenen Eigenschaft automatisch klassifiziert. Das Erzeugen der Eingangsdaten aus den unbekannten Gewebeproben erfolgt dabei analog zum Erzeugen der Trainingsdaten aus den bekannt positiven und negativen, also den bekannten Gewebeproben, wobei jedoch vorab, also vor ihrer Klassifizierung durch den Klassifikator, den Eingangsdaten keine positive oder negative Annotation oder Kennzeichnung hinzugefügt oder zugeordnet wird.

Der für die vorliegende Erfindung verwendete automatische Klassifikator nutzt eine, basiert also auf einer Methode des maschinellen Lernens. Es wird hierbei jedoch nicht ein vor einem produktiven Einsatz bereits vollständig und abschließend trainiertes System eingesetzt. Vielmehr ist es ein besonderer Vorteil der vorliegenden Erfindung, dass der Klassifikator patientenspezifisch und individuell trainiert oder nachtrainiert, also auf oder an einen bestimmten Patienten angepasst oder adaptiert wird, bevor die von eben diesem individuellen Patienten entnommene unbekannte Gewebeprobe klassifiziert wird. Dieses individualisierte Anpassen oder Adaptieren, also das patientenspezifische Trainieren des Klassifikators anhand der annotierten Trainingsdaten, kann dabei besonders vorteilhaft während oder parallel zu einer Operation oder eines Eingriffs an demselben Patienten, also intra-operativ durchgeführt werden.

Da Gewebeveränderungen, Tumore und dergleichen sehr vielfältig und individuell ausgeprägt sein können, ergibt sich durch diese Patienten spezifische, individualisierte Adaption des Klassifikators vorteilhaft eine verbesserte Zuverlässigkeit bei dem Klassifizieren von unbekannten Gewebeproben desselben Patienten. Aufgrund dieser verbesserten, zuverlässigeren oder genaueren Klassifizierung und der Möglichkeit, die unbekannten Gewebeproben online, also beispielsweise während der Operation oder während des Eingriffs, beispielsweise innerhalb einiger Sekunden, zu klassifizieren, wird dem jeweiligen behandelnden Arzt vorteilhaft ermöglicht, den betroffenen Gewebebereich genauer einzugrenzen. Somit kann durch die vorliegende Erfindung ein Anteil von gesundem Gewebe, welches den betroffenen Gewebebereich umgibt, bei dessen Resektion oder Ektomie reduziert werden. Mit anderen Worten ermöglicht die vorliegende Erfindung also eine schonendere Behandlung, bei der weniger gesundes, also nicht betroffenes Gewebe entfernt wird, ohne dabei zu einem erhöhten Risiko zu führen.

Als die vorgegebene Eigenschaft kann beispielsweise ein Vorhandensein oder Vorleigen einer krankhaften Veränderung an oder in der jeweiligen Gewebeprobe vorgegeben oder definiert sein. Dabei können konkrete Eigenschaften, wie beispielsweise eine Verfärbung, ein Vorhandensein und/oder eine räumliche Verteilung und/oder Dichte bestimmter vorgegebener Strukturen, eine bestimmte Form, beispielsweise einer Zelle oder eines Zellteils oder Zellverbundes, oder dergleichen mehr definiert und vorgegeben sein oder werden. Ebenso kann jedoch der Klassifikator relevante Eigenschaften und Unterschiede zwischen betroffenen, also positiven Gewebeproben einerseits und gesunden, also nicht betroffenen, negativen Gewebeproben andererseits selbstständig lernen.

Erfindungsgemäß wird ein Bild des betroffenen Gewebebereiches und von dessen nicht betroffener Umgebung mit jeweiligen Bildkoordinaten von Entnahmeorten der klassifizierten Gewebeproben elektronisch einem Analysegerät bereitgestellt und darauf basierend von dem Analysegerät automatisch wenigstens ein Vorschlag für einen Entnahmeort für eine weitere unbekannte Gewebeprobe zum Eingrenzen des betroffenen Gewebebereiches ermittelt und an einen Benutzer ausgegeben. Dazu kann das Analysegerät beispielsweise auf eine bereitgestellte Datenbank zurückgreifen, in der beispielsweise typische Formen, Größen, Wachstumsrichtungen und dergleichen von Tumoren hinterlegt sind. Wie im Zusammenhang mit dem Ermitteln der abgeschätzten Ausdehnung des betroffenen Gewebebereiches beschrieben, können dabei ebenso weitere Daten oder Größen berücksichtigt werden.

Von dem Analysegerät können iterativ jeweils alle Entnahmeorte der bis zum jeweiligen Zeitpunkt klassifizierten Gewebeproben berücksichtigt werden für den jeweils nächsten Vorschlag. Auf diese Weise kann, beispielsweise algorithmisch gesteuert, eine schrittweise Eingrenzung des betroffenen Gewebebereiches basierend auf objektiven Kriterien beziehungsweise Daten realisiert werden. Dies kann vorteilhaft dazu führen, dass der betroffene Gewebebereich besonders zuverlässig, genau, schnell und mit einer minimalen Anzahl von Gewebeproben bestimmt werden kann.

In einer vorteilhaften Weiterbildung der vorliegenden Erfindung weist der Klassifikator adaptierbare Parameter, insbesondere ein neuronales Netz, eine nichtlineare Polynomfunktion und/oder ein Fuzzylogik-System, auf, die in Abhängigkeit von den Trainingsdaten zum Verarbeiten der Eingangsdaten, insbesondere automatisch, angepasst werden. Die Trainingsdaten und die Eingangsdaten werden also beispielsweise durch den Klassifikator mittels eines neuronalen Netzes klassifiziert. Mit anderen Worten ist oder umfasst der Klassifikator also beispielsweise wenigstens ein neuronales Netz, welches anhand der Trainingsdaten darauf trainiert ist beziehungsweise trainiert wird, die Eingangsdaten hinsichtlich der vorgegebenen Eigenschaft zu klassifizieren. Ein Adaptieren der Parameter bedeutet insbesondere ein Anpassen jeweiliger Werte oder Größen der Parameter. Durch den Einsatz beispielsweise des neuronalen Netzes kann eine besonders schnelle und zuverlässige Klassifikation erreicht werden, wobei vorteilhaft das Klassifizieren jeder der unbekannten Gewebeproben sowie das Annotieren der bekannt positiven und negativen Gewebeproben mit besonders geringem Aufwand durchgeführt werden kann. Das neuronale Netz kann vorteilhaft beispielsweise ein konvolutionales neuronales Netz (CNN, englisch: "convolutional neural net") sein. Besonders vorteilhaft kann das neuronale Netz tief sein, also eine oder mehrere versteckte Zwischenschichten (englisch: "hidden layers") von Neuronen aufweisen. Hierdurch kann vorteilhaft eine besonders genaue Klassifizierung auch komplexer Trainings- und Eingangsdaten erreicht werden.

In vorteilhafter Weiterbildung der vorliegenden Erfindung werden die die adaptierbaren Parameter, insbesondere das neuronale Netz, die nichtlineare Polynomfunktion und/oder das Fuzzylogik-System, anhand einer Vielzahl von annotierten Trainingsdaten einer Vielzahl unterschiedlicher Patienten vortrainiert und anhand der positiven und negativen Gewebeproben patientenspezifisch für denjenigen Patienten, von dem die anschließend zu klassifizierenden unbekannten Gewebeproben stammen, nachtrainiert. Mit anderen Worten wird also die adaptierbaren Parameter - beispielsweise das neuronale Netz - mittels der bekannt positiven und negativen Gewebeproben des bestimmten Patienten adaptiert, also angepasst, ohne dass für jeden neuen Patienten, von dem jeweilige unbekannte Gewebeproben klassifiziert werden sollen, neue zufällige Parameter verwendet werden, also ohne, dass beispielsweise das neuronale Netz neu mit zufälligen Parametern oder Gewichten initialisiert wird. Dieses Vorgehen kann besonders vorteilhaft sein, da durch die Vielfalt der von der Vielzahl unterschiedlicher Patienten stammenden Trainingsdaten ein Bias der Werte oder Größen der Parameter oder beispielsweise des neuronalen Netzes oder ein unbeabsichtigtes Anlernen irrelevanter Eigenschaften der Gewebeproben besonders zuverlässig vermieden werden kann. Das Vortrainieren beispielsweise des neuronalen Netzes mit den von der Vielzahl unterschiedlicher Patienten stammenden Trainingsdaten kann also vor einem produktiven Einsatz des neuronalen Netzes erfolgen. Demgegenüber erfolgt das patientenspezifische Adaptieren oder Nachtrainieren beispielsweise des neuronalen Netzes mittels der bekannt positiven und negativen Gewebeproben desjenigen Patienten, von dem auch die im jeweils aktuellen Anwendungsfall anschließend zu klassifizierenden unbekannten Gewebeproben stammen, während eines produktiven Einsatzes, also beispielsweise intra-operativ während oder parallel zu einer Operation oder einem Eingriff an eben diesem Patienten. Auf diese Weise kann vorteilhaft ein besonders umfangreiches Training des neuronalen Netzes mit der vorteilhaften individualisierten, patientenspezifischen Adaption des neuronalen Netzes kombiniert werden, insbesondere mit einem zeitlichen Aufwand, der eine patientenspezifisch adaptierte, also auf den individuellen, zu behandelnden Patienten abgestimmte oder angepasste Klassifizierung während oder parallel zu einer Behandlung, insbesondere während einer einzigen Behandlungssitzung, des jeweiligen Patienten ermöglicht.

In vorteilhafter Weiterbildung der vorliegenden Erfindung werden die adaptierbaren Parameter, insbesondere das neuronale Netz, die nichtlineare Polynomfunktion und/oder das Fuzzylogik-System, ausschließlich anhand von Trainingsdaten trainiert, die aus jeweils mehreren bekannt positiven und bekannt negativen Gewebeproben desselben Patienten, von dem auch die anschließend zu klassifizierenden unbekannten Gewebeproben stammen, erzeugt worden sind. Mit anderen Worten werden die Parameter beziehungsweise beispielsweise das neuronale Netz also ausschließlich anhand von oder auf Basis von Gewebeproben eines einzigen Patienten und entsprechenden Trainingsdaten trainiert. Hierdurch kann das beispielsweise neuronale Netz vorteilhaft besonders genau auf individuelle Eigenschaften oder Eigenarten des jeweiligen Patienten trainiert werden, die andernfalls, also bei einem Training anhand von Gewebeproben einer Vielzahl von unterschiedlichen Patienten, untergehen oder herausgemittelt werden könnten. Da Tumore und andere histologische Ausprägungen individuell von Patient zu Patient verschieden sein können, lässt sich so eine besonders zuverlässige Unterscheidung zwischen betroffenen und gesunden Gewebeproben, also eine besonders genaue und zuverlässige Klassifizierung erreichen. Heutzutage sind dabei spezialisierte Computerchips und Prozessoreinrichtungen verfügbar, welche ein derartiges patientenspezifisches, individualisiertes Training auch während einer typischen Zeitdauer einer Operation oder eines medizinischen Eingriffs, beispielsweise innerhalb einiger Stunden, ermöglichen. Bei dieser Ausgestaltung des erfindungsgemäßen Verfahrens können also initial zufällige Parameter oder Parameterwerte verwendet werden, beispielsweise also das neuronale Netz mit zufälligen Parametern oder Gewichten initialisiert werden, und dann ausschließlich basierend auf von einem einzigen Patienten gewonnenen Gewebeproben beziehungsweise Trainingsdaten abschließend adaptiert beziehungsweise trainiert werden. Dies kann auch im Hinblick auf eine Vertraulichkeit und Datensicherheit von medizinischen Daten besonders vorteilhaft sein, da für das Trainieren des neuronalen Netzes für den jeweiligen individuellen Patienten keine medizinischen Daten anderer Patienten verwendet werden müssen.

In vorteilhafter Weiterbildung des erfindungsgemäßen Verfahrens werden zum Erzeugen der Trainingsdaten und der Eingangsdaten die jeweiligen, also die den Trainingsdaten und den Eingangsdaten jeweils zugrundeliegenden, Gewebeproben optisch erfasst. Die Trainingsdaten und die Eingangsdaten werden dann zum Klassifizieren durch den Klassifikator mittels einer Bildverarbeitung analysiert. Mit anderen Worten verarbeitet der Klassifikator also nicht die eigentlichen Gewebeproben selbst, sondern Bilddaten der Gewebeproben, die mittels deren optischer Erfassung gewonnen oder erzeugt werden. Hierfür kann beispielsweise eine Kamera verwendet werden. Die Kamera kann je nach technischen Anforderungen beispielsweise mit einem Mikroskop kombiniert oder gekoppelt werden. Eine Klassifizierung auf Basis einer Datenverarbeitung von Bilddaten der Gewebeproben kann dabei vorteilhaft besonders einfach und schnell durchgeführt werden. Ebenso kann gegenüber einer Verarbeitung der Gewebeproben selbst eine Komplexität eines entsprechenden, den Klassifikator umfassenden Analysegeräts reduziert werden, da beispielsweise keine Anforderungen bezüglich einer Handhabung biologischen Materials beachtet werden müssen. Die Bildverarbeitung kann dabei das Verarbeiten beispielsweise mittels eines neuronalen Netzes ebenso einschließen wie konventionelle Bildverarbeitungsschritte, beispielsweise eine algorithmische Kantenerkennung, Segmentierung und/oder dergleichen mehr.

In vorteilhafter Weiterbildung der vorliegenden Erfindung wird zum Erzeugen der Trainingsdaten eine Gewebeprobe aus einem Zentralbereich eines Tumors als die bekannt positive Gewebeprobe und eine Gewebeprobe aus einer Umgebung des Tumors als die bekannt negative Gewebeprobe verarbeitet. Als die unbekannten Gewebeproben werden dabei solche Gewebeproben verarbeitet, deren Entnahmeorte einen geringeren räumlichen Abstand zu einem Entnahmeort der bekannt positiven Gewebeprobe aufweisen als ein Entnahmeort der bekannt negativen Gewebeprobe. Mit anderen Worten liegen den Eingangsdaten also Gewebeproben zugrunde, deren Entnahmeorte zwischen den Entnahmeorten der bekannt positiven und der bekannt negativen Gewebeproben angeordnet sind. Auf diese Weise kann eine Grenze des Tumors und damit dessen Ausdehnung, also die Ausdehnung oder Größe des betroffenen Gewebebereiches, besonders zuverlässig und genau bestimmt werden.

In vorteilhafter Weiterbildung der vorliegenden Erfindung wird ein Bild des betroffenen Gewebebereiches und von dessen nicht betroffener Umgebung mit jeweiligen Bildkoordinaten von Entnahmeorten der klassifizierten Gewebeproben, insbesondere der Entnahmeorte der bekannt positiven und negativen Gewebeproben, elektronisch einem Analysegerät bereitgestellt. Darauf basierend wird mittels des Analysegeräts automatisch eine abgeschätzte Ausdehnung des betroffenen Gewebebereiches ermittelt. Die abgeschätzte Ausdehnung wird von dem Analysegerät dann automatisch in dem Bild visualisiert, also beispielsweise grafisch dargestellt oder markiert. Das Bild stellt dann also den betroffenen und einen nicht betroffenen, umgebenden Gewebebereich dar, zum Beispiel also einen Bereich eines Organs, der größer ist als der jeweilige Tumor.

Das Abschätzen der Ausdehnung oder Größe des betroffenen Gewebebereiches, also beispielsweise des Tumors, kann auf Basis eines vorgegebenen Algorithmus erfolgen. Dazu kann das Analysegerät beispielsweise auf eine bereitgestellte medizinische Datenbank mit typischen Tumorgrößen, Daten des jeweiligen Patienten und dergleichen mehr zugreifen. Ebenso kann die Ausdehnung in Abhängigkeit von jeweiligen Ergebnissen einer Analyse der Gewebeproben und/oder einer Bildverarbeitung von Bildern beziehungsweise Bilddaten der Gewebeproben abgeschätzt beziehungsweise ermittelt werden. Dabei kann ebenso die jeweilige Klassifikation, also ein Ergebnis oder Ausgabe Datum des Klassifikators berücksichtigt werden. Beispielsweise kann für jede der Gewebeproben wenigstens eine weitere biologische oder histologische Eigenschaft oder eine Größe eines biologischen oder histologischen Parameters bestimmt werden. Darauf basierend kann dann beispielsweise automatisch abgeschätzt werden, ob die jeweilige Gewebeprobe beispielsweise aus einem Zentralbereich oder einem Randbereich des jeweiligen Tumors stammt.

Hierzu könnte beispielsweise eine Größe, Anzahl oder Dichte von Blutgefäßen bestimmt und mit typischen Werten oder Größen aus verschiedenen Bereichen eines Tumors und/oder umgebenden Gewebes verglichen werden. Das Visualisieren der ermittelten abgeschätzten Ausdehnung kann beispielsweise durch Einblenden oder Überlagern einer entsprechenden Markierung auf einem Bildschirm oder Anzeigegerät gleichzeitig mit dem Bild des betroffenen Gewebebereiches und dessen Umgebung realisiert werden.

Diese Visualisierung kann besonders vorteilhaft iterativ mit jeder klassifizierten Gewebeprobe angepasst werden, um schrittweise eine verbesserte Abschätzung der tatsächlichen Ausdehnung des betroffenen Gewebebereiches zu erreichen. Durch das Ermitteln und Visualisieren der abgeschätzten Ausdehnung des betroffenen Gewebebereiches kann der jeweilige behandelnde Arzt vorteilhaft bei der Behandlung des Patienten unterstützt werden. Insbesondere in Verbindung mit dem Klassifizieren von mehreren unbekannten Gewebeproben des Patienten kann so letztlich besonders zuverlässig eine Verringerung der Menge von ansonsten unnötig entferntem gesundem Gewebe erreicht werden.

Ein Analysegerät zum Klassifizieren von Gewebeproben, welches eine Eingangsschnittstelle zum Empfangen von aus Gewebeproben erzeugten Trainingsdaten und Eingangsdaten, einen automatischen Klassifikator zum Klassifizieren der Gewebeproben hinsichtlich einer vorgegebenen Eigenschaft durch Verarbeiten der Trainingsdaten und der Eingangsdaten, und eine Ausgabeeinrichtung zum Ausgeben entsprechender jeweiliger Klassifikationen der Gewebeproben aufweist, kann zum Durchführen des erfindungsgemäßen Verfahrens eingerichtet sein. Dieses Analysegerät ist dazu eingerichtet, basierend auf einem Bild eines teilweise von der vorgegebenen Eigenschaft betroffenen Gewebebereiches und zugeordneten Bildkoordinaten bereits klassifizierter Gewebeproben aus diesem Gewebebereich automatisch einen Vorschlag für einen Entnahmeort für eine weitere Gewebeprobe zum Eingrenzen, also Lokalisieren, eines betroffenen Teils des Gewebebereiches zu ermitteln und auszugeben.

Das Analysegerät kann besonders vorteilhaft als handgeführtes Gerät, also in miniaturisierter Form, ausgebildet sein. Vorteilhaft kann das Analysegerät dabei eine Sensoreinrichtung aufweisen. Diese Sensoreinrichtung kann insbesondere die Kamera und/oder wenigstens einen optischen, akustischen, elektrischen und/oder chemischen Sensor umfassen zum Erfassen der jeweiligen Gewebeproben, insbesondere also zum Erzeugen der Trainings- und/oder der Eingangsdaten. Die Sensoreinrichtung kann vorteilhaft in einer Spitze oder einem Endstück des handgeführten Analysegeräts angeordnet sein. Die Spitze oder das Endstück können sich dabei an ein Griffstück oder einen Korpus des Analysegeräts anschließen. In dem Griffstück oder Korpus können dann etwa elektronische Einrichtungen und Schaltungen zur Datenverarbeitung angeordnet sein.

Die Merkmale und Eigenschaften der oben beschriebenen Analysegeräte können ebenso in einem einzigen Analysegerät vereint oder kombiniert sein. Das Analysegerät beziehungsweise die

Analysegeräte können jeweils wenigstens eine Datenverarbeitungseinrichtung mit wenigstens einem elektronischen Datenspeicher und wenigstens einer Prozessoreinrichtung aufweisen. In dem elektronischen Datenspeicher kann insbesondere einen Programmcode abgespeichert sein, der mittels der Prozessoreinrichtung ausführbar ist und der jeweilige Steueranweisungen für das Analysegerät zum Durchführen der beschriebenen Maßnahmen beziehungsweise Verfahrensschritte bei seiner Ausführung repräsentiert oder kodiert.

Die bisher und im Folgenden angegebenen Eigenschaften und Weiterbildungen des erfindungsgemäßen Verfahrens sowie die entsprechenden Vorteile sind jeweils sinngemäß auf die Analysegeräte und/oder zum Durchführen des erfindungsgemäßen Verfahrens verwendete oder verwendbare Bauteile und Einrichtungen übertragbar und umgekehrt.

Weitere Merkmale, Einzelheiten und Vorteile der vorliegenden Erfindung ergeben sich aus der nachfolgenden Beschreibung bevorzugter Ausführungsbeispiele sowie anhand der Zeichnungen. Dabei zeigen:
- FIG 1: eine schematische Darstellung eines Tumors und umgebenden gesunden Gewebes;
- FIG 2: eine schematische Darstellung eines Analysegeräts zum Klassifizieren von Gewebeproben;
- FIG 3: ein Schema zum Illustrieren eines Trainings eines Klassifikators; und
- FIG 4: eine schematische Darstellung zum Illustrieren einer verbesserten Eingrenzung eines Tumors mittels eines Klassifikators.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

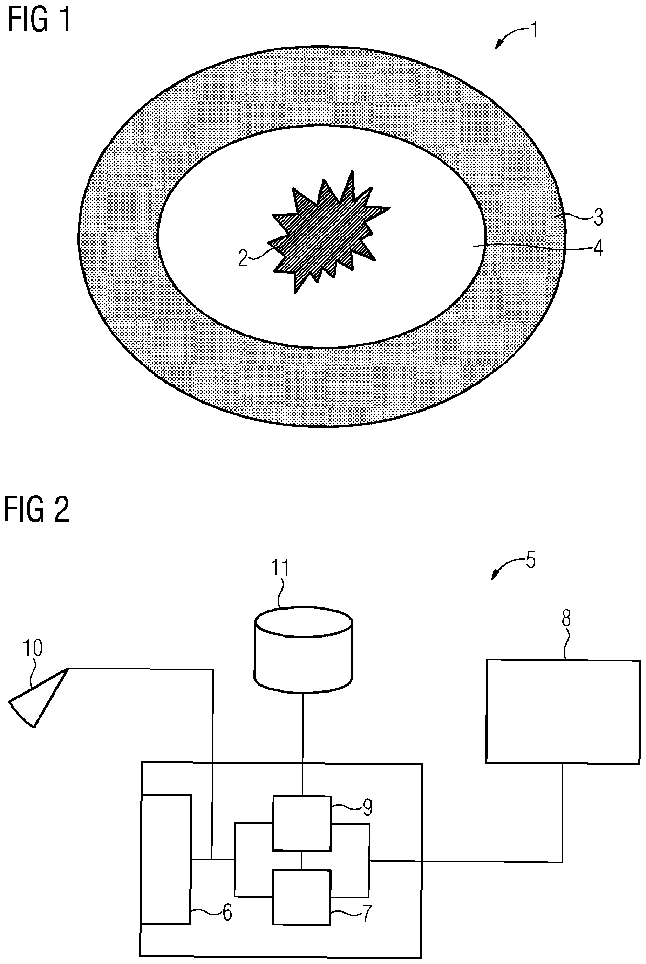

FIG 1 zeigt eine schematische Schnittansicht eines Gewebebereiches 1 mit einem zentralen Tumor 2 und umgebenden gesunden Gewebe 3.

Bei Tumor-Resektionen oder -Ektomien ist ein Problem das Finden der Tumorgrenzen. Einerseits soll der Tumor 2 komplett entfernt werden, andererseits soll aber nicht zu viel gesundes Gewebe 3 herausgeschnitten werden, um ein jeweils betroffenes Organ, wie beispielsweise die Leber, nicht mehr als notwendig zu schädigen. Nach aktuellem Stand der Technik wird üblicherweise nicht nur der Tumor 2, sondern auch diesen umgebendes Gewebe in einer Sicherheitszone 4 entfernt.

Um möglichst wenig gesundes Gewebe 3 zu entfernen, also die Sicherheitszone 4 zu verkleinern, wird ein Verfahren zum Klassifizieren von Gewebeproben eingesetzt. Dazu wird vorliegend ein in FIG 2 schematisch dargestelltes Analysegerät 5 verwendet. Das Analysegerät 5 umfasst dazu eine Eingangsschnittstelle 6 zum Empfangen von aus Gewebeproben erzeugten Trainingsdaten und Eingangsdaten. Diese Daten werden an einen automatischen Klassifikator 7 des Analysegeräts 5 weitergeleitet, welcher mittels eines neuronalen Netzes eine Klassifizierung der Trainings- und Eingangsdaten und damit der jeweils zugrundeliegenden Gewebeproben hinsichtlich wenigstens einer vorgegebenen Eigenschaft durchführt. In diesem Beispiel dient als Eigenschaft, ob die jeweilige Gewebeprobe Tumorgewebe aus dem Tumor 2 oder gesundes Gewebe 3 ist.

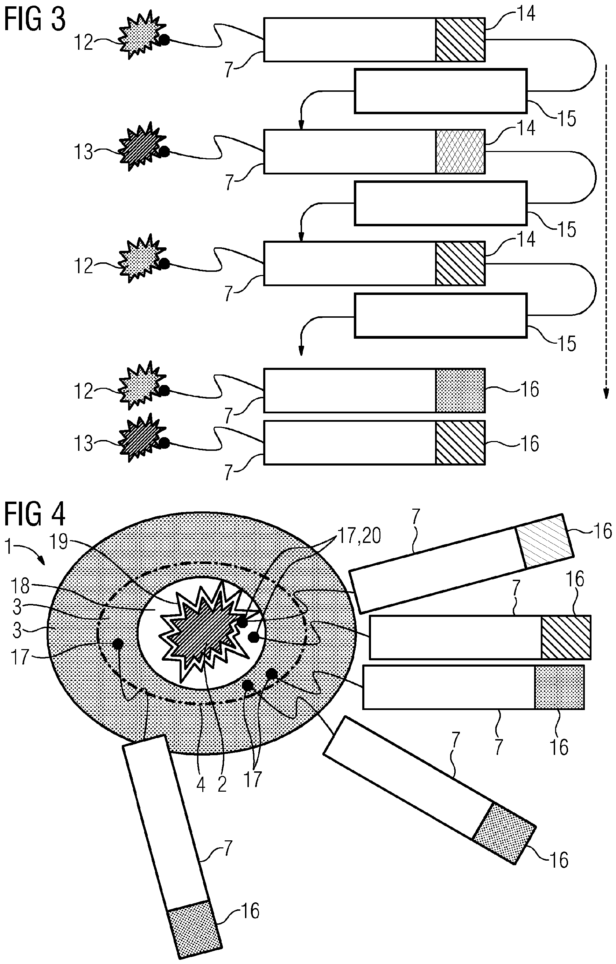

Dazu wird der Klassifikator 7 beziehungsweise dessen neuronales Netz zunächst trainiert. Dieses Training ist schematisch in FIG 3 veranschaulicht. Dabei werden zunächst annotierte Trainingsdaten aus Gewebeproben erzeugt, die aus dem Gewebebereich 1 stammen. Den annotierten Trainingsdaten liegen dabei mehrere bekannt negativen Gewebeproben 12, die aus dem gesunden Gewebe 3 stammen, und mehrere bekannt positive Gewebeproben 13, die aus dem Tumor 2 stammen, zugrunde. Die annotierten Trainingsdaten werden dem Klassifikator 7 bereitgestellt, der daraufhin beispielsweise eine Reihe falscher Klassifikationen 14 liefert. Nach jeder falschen Klassifikation 14 erfolgt eine jeweilige Parameteranpassung 15, bei der für die Klassifizierung verwendete Parameter oder Gewichte des Klassifikators 7, insbesondere automatisch, modifiziert werden. Nach einer Reihe derartiger Parameteranpassungen 15 ist der Klassifikator 7 schließlich so weit trainiert, dass er sowohl für die bekannt negativen Gewebeproben 12 als auch für die bekannt positiven Gewebeproben 13 jeweils korrekte Klassifikationen 16 liefert, also ausgibt. Dieser Trainings- oder Anpassungsprozess des Klassifikators 7 wird dabei individuell für einen jeden zu behandelnden Patienten durchgeführt, in diesem Fall für denjenigen Patienten, von dem der Gewebebereich 1 stammt. Damit wird also der Klassifikator 7 patientenspezifisch trainiert.

Wiederum bezugnehmend auf FIG 2 werden die Klassifikationen 14, 16 des Klassifikators 7 beispielsweise auf einem Anzeigegerät 8 ausgegeben oder dargestellt.

Der Klassifikator 7 ist vorliegend also als lernendes System ausgebildet. Der lernende Klassifikator 7 kann mittels einer nichtlinearen Funktion mit einer Vielzahl von - vor dem Training zunächst zufällig initialisierten - Parametern realisiert werden. Das Training funktioniert, da die korrekten Klassifikationen 16 für die auf den bekannt negativen und positiven Gewebeproben 12, 13 basierenden annotierten Trainingsdaten vorab bekannt sind und somit ein jeweiliger Output oder ein jeweiliges Resultat, also die von dem Klassifikator 7 jeweils gelieferten Klassifikationen 14, 16, mit dem gewünschten, bekannten Zielresultat verglichen werden können. Die Parameteranpassungen 15 werden vorliegend mittels einer Methode der nichtlinearen Optimierung realisiert. Nach Abschluss des Trainings kann der Klassifikator 7 auch unbekannte Gewebeproben durch Verarbeiten der jeweiligen daraus erzeugten Eingangsdaten korrekt klassifizieren.

Im vorliegenden Fall stammen die zu klassifizierenden unbekannten Gewebeproben dabei von demselben Patienten, von dem auch die für das Training oder die Adaption des Klassifikators 7 verwendeten bekannt negativen und bekannt positiven Gewebeproben 12, 13 stammen. So kann also eine verbesserte Klassifikation von, beispielsweise intra-operativ gewonnenen, histologischen Gewebeproben erreicht werden, die eine genauere, also engere und für den jeweiligen Patienten schonendere Resektion des Tumors 2 ermöglichen. Durch die patientenspezifische Adaption des Klassifikators 7 auf eben diesen Patienten und dessen spezifischen Tumor 2 kann eine Sensitivität des Klassifikators 7 erhöht werden, sodass unbekannte Gewebeproben aus der Sicherheitszone 4 zuverlässiger und genauer korrekt klassifiziert werden können. Dies ist schematisch in FIG 4 veranschaulicht.

In FIG 4 ist erneut der Gewebebereich 1 mit dem Tumor 2 und dem gesunden Gewebe 3 schematisch dargestellt. Zum Eingrenzen einer tatsächlichen Größe oder Ausdehnung des Tumors 2 werden mittels des Klassifikators 7 mehrere unbekannte Gewebeproben, von denen zunächst nicht bekannt ist, ob sie aus dem Tumor 2 oder aus dem gesunden Gewebe 3 stammen, klassifiziert. Diese unbekannten Gewebeproben stammen dabei von unterschiedlichen Entnahmeorten 17, die zwischen einem Zentrum des Tumors 2 und dem in FIG 1 dargestellten Bereich des gesunden Gewebes 3 angeordnet sind. Damit kann eine neue Sicherheitszone 18 definiert werden, die kleiner ist, also den Tumor 2 enger umgibt und damit weniger gesundes Gewebe 3 umfasst als die herkömmlich vorgesehene größere Sicherheitszone 4.

Darüber hinaus weist das Analysegerät 5 vorliegend weiterhin eine Datenverarbeitungseinrichtung 9 (siehe FIG 2) auf. Vorliegend werden der Datenverarbeitungseinrichtung 9 ein mittels einer Kamera 10 erfasstes Bild des Gewebebereiches 1 und die jeweiligen Entnahmeorte 17 der klassifizierten unbekannten Gewebeproben sowie der bekannt negativen und bekannt positiven Gewebeproben 12, 13 bereitgestellt. Darüber hinaus hat die Datenverarbeitungseinrichtung 9 Zugriff auf eine medizinische Datenbank 11. Die Datenbank 11 kann ganz oder teilweise Teil des Analysegeräts 5 sein. Ebenso kann die Datenbank 11 ganz oder teilweise Teil einer externen Servereinrichtung, beispielsweise eines Cloud-Servers, sein. Mittels der Datenverarbeitungseinrichtung 9 wird in Abhängigkeit von diesen, also auf Basis der bereitgestellten Daten eine abgeschätzte Ausdehnung 19 des Tumors 2 ermittelt und ebenfalls auf dem Anzeigegerät visualisiert, also dargestellt. Zusätzlich gibt die Datenverarbeitungseinrichtung 9 beziehungsweise das Analysegerät 5 vorgeschlagene Entnahmeorte 20 für weitere unbekannte Gewebeproben zum weiteren, genaueren Eingrenzen des Tumors 2 an einen Benutzer, also etwa den jeweiligen behandelnden Arzt, aus.

Insgesamt zeigen die beschriebenen Beispiele, wie durch eine patientenspezifische Adaption eines lernenden Klassifikators 7 und eine zeitnah, intra-operativ durchgeführte Klassifizierung von Gewebeproben desselben Patienten eine genauere, engere und somit schonendere Resektion oder Ektomie von krankhaftem Gewebe ermöglicht werden kann.

## Patentansprüche

1. Verfahren zum Klassifizieren von Gewebeproben, bei dem
- aus wenigstens einer bekannt positiven Gewebeprobe (13), die eine vorgegebene Eigenschaft aufweist, und wenigstens einer bekannt negativen Gewebeprobe (12), die die vorgegebene Eigenschaft nicht aufweist, annotierte Trainingsdaten erzeugt werden, wobei
- die annotierten Trainingsdaten einem automatischen Klassifikator (7) bereitgestellt werden,
- der Klassifikator (7) anhand der annotierten Trainingsdaten darauf trainiert wird, zu erkennen, ob eine Gewebeprobe dieses Patienten die vorgegebene Eigenschaft aufweist,
- zum Eingrenzen eines von der vorgegebenen Eigenschaft betroffenen Gewebebereiches (2) aus mehreren unbekannten Gewebeproben, von denen nicht bekannt ist, ob sie die vorgegebene Eigenschaft aufweisen, Eingangsdaten für den Klassifikator (7) erzeugt werden,
- die unbekannten Gewebeproben anhand der Eingangsdaten mittels des Klassifikators (7) hinsichtlich der vorgegebenen Eigenschaft automatisch klassifiziert werden;
- ein Bild des betroffenen Gewebebereiches (2) und von dessen Umgebung (3, 4, 18) mit jeweiligen Bildkoordinaten von Entnahmeorten (17) der klassifizierten Gewebeproben elektronisch einem Analysegerät (5) bereitgestellt wird, und
- darauf basierend von dem Analysegerät (5) automatisch ein Vorschlag für einen Entnahmeort (17, 20) für eine weitere unbekannte Gewebeprobe zum Eingrenzen des betroffenen Gewebebereiches (2) ermittelt und an einen Benutzer ausgegeben wird, **dadurch gekennzeichnet, dass**
die positiven und negativen Gewebeproben (12, 13), aus denen die annotierten Trainingsdaten erzeugt werden, von demselben Patienten stammen,
dass der Klassifikator (7) patientenspezifisch für denselben Patienten trainiert wird, von dem die bekannt positiven und negativen Gewebeprobben (12, 13) stammen und dass
die unbekannten Gewebeproben ebenfalls von demselben Patienten stammen, von dem die bekannten Gewebeproben (12, 13) stammen.

2. Verfahren nach Anspruch 1, **dadurch gekennzeichnet, dass** der Klassifikator (7) adaptierbare Parameter, insbesondere ein neuronales Netz, eine nichtlineare Polynomfunktion und/oder ein Fuzzylogik-System, aufweist, die in Abhängigkeit von den Trainingsdaten zum Verarbeiten der Eingangsdaten, insbesondere automatisch, angepasst werden.

3. Verfahren nach Anspruch 2, **dadurch gekennzeichnet, dass** die adaptierbaren Parameter, insbesondere das neuronale Netz, die nichtlineare Polynomfunktion und/oder das Fuzzylogik-System, anhand einer Vielzahl von annotierten Trainingsdaten einer Vielzahl unterschiedlicher Patienten vortrainiert und anhand der positiven und negativen Gewebeproben (12, 13) patientenspezifisch für denjenigen Patienten, von dem die anschließend zu klassifizierenden unbekannten Gewebeproben stammen, nachtrainiert werden.

4. Verfahren nach Anspruch 2, **dadurch gekennzeichnet, dass** die adaptierbaren Parameter, insbesondere das neuronale Netz, die nichtlineare Polynomfunktion und/oder das Fuzzylogik-System, ausschließlich anhand von Trainingsdaten trainiert werden, die aus jeweils mehreren bekannt positiven und bekannt negativen Gewebeproben (12, 13) desselben Patienten, von dem auch die anschließend zu klassifizierenden unbekannten Gewebeproben stammen, erzeugt worden sind.

5. Verfahren nach einem der vorhergehenden Ansprüche, **dadurch gekennzeichnet, dass** zum Erzeugen der Trainingsdaten und der Eingangsdaten die jeweiligen Gewebeproben (12, 13) optisch erfasst werden und die Trainingsdaten und Eingangsdaten zum Klassifizieren durch den Klassifikator (7) mittels einer Bildverarbeitung analysiert werden.

6. Verfahren nach einem der vorhergehenden Ansprüche, **dadurch gekennzeichnet, dass** zum Erzeugen der Trainingsdaten eine Gewebeprobe aus einem Zentralbereich eines Tumors (2) als die bekannt positive Gewebeprobe (13), eine Gewebeprobe aus einer Umgebung (3) des Tumors (2) als die bekannt negative Gewebeprobe (12) und als die unbekannten Gewebeproben solche Gewebeproben verarbeitet werden, deren Entnahmeorte (17) einen geringeren räumlichen Abstand zu einem Entnahmeort der bekannt positiven Gewebeprobe (13) aufweisen als ein Entnahmeort der bekannt negativen Gewebeprobe (12).

7. Verfahren nach einem der vorhergehenden Ansprüche, **dadurch gekennzeichnet, dass**
- ein Bild des betroffenen Gewebebereiches (2) und von dessen Umgebung (3, 4, 18) mit jeweiligen Bildkoordinaten von Entnahmeorten (17) der klassifizierten Gewebeproben elektronisch einem Analysegerät bereitgestellt wird,
- darauf basierend mittels des Analysegeräts (5) automatisch eine abgeschätzte Ausdehnung (19) des betroffenen Gewebebereiches (2) ermittelt wird, und
- die abgeschätzte Ausdehnung (19) von dem Analysegerät (5) automatisch in dem Bild visualisiert wird.

8. Verfahren nach einem der vorhergehenden Ansprüche, **dadurch gekennzeichnet, dass**
mittels des Analysegeräts auf eine Datenbank zurückgegriffen wird, um den Vorschlag für den Entnahmeort zu ermitteln, in der beispielsweise typische Formen, Größen und Wachstumsrichtungen von Tumoren hinterlegt sind.

9. Verfahren nach Anspruch 8, **dadurch gekennzeichnet, dass** von dem Analysegerät iterativ jeweils alle Entnahmeorte der bis zum jeweiligen Zeitpunkt klassifizierten Gewebeproben berücksichtigt werden für den jeweils nächsten Vorschlag.

## Claims

1. Method for classifying tissue samples, with which
- annotated training data is generated from at least one known positive tissue sample (13) that has a specified property and at least one known negative tissue sample (12) that does not have the specified property, wherein
- the annotated training data is provided to an automatic classifier (7),
- the classifier (7) is trained using the annotated training data to identify whether a tissue sample from this patient has the specified property,
- to delimit a tissue region (2) affected by the specified property from a plurality of unknown tissue samples for which it is not known whether they have the specified property, input data is generated for the classifier (7),
- the unknown tissue samples are automatically classified by means of the classifier (7) with respect to the specified property using the input data;
- an image of the affected tissue region (2) and the environment thereof (3, 4, 18) with respective image coordinates of sampling locations (17) of the classified tissue samples are provided to an analysis device (5) by electronic means, and
- on the basis thereof, the analysis device (5) automatically ascertains a suggestion for a sampling location (17, 20) for a further unknown tissue sample for delimiting the affected tissue region (2) and outputs this to a user, **characterised in that**
the positive and negative tissue samples (12, 13), from which the annotated training data is generated, originate from the same patient,
the classifier (7) is trained patient-specifically for the same patient from whom the known positive and negative tissue samples (12, 13) originate and
the unknown tissue samples likewise originate from the same patient, from which the known tissue samples (12, 13) originate.

2. Method according to claim 1, **characterised in that** the classifier (7) comprises adaptable parameters, in particular a neural network, a non-linear polynomial function and/or a fuzzy logic system, which are adjusted, in particular automatically, in dependence on the training data in order to process the input data.

3. Method according to claim 2, **characterised in that** the adaptable parameters, in particular the neural network, the non-linear polynomial function and/or the fuzzy logic system, are pretrained using a large amount of annotated training data from a large number of different patients and post-trained using the positive and negative tissue samples (12, 13) patient-specifically for the respective patients from whom the unknown tissue samples for subsequent classification originate.

4. Method according to claim 2, **characterised in that** the adaptable parameters, in particular the neural network, the non-linear polynomial function and/or the fuzzy logic system, are exclusively trained using training data generated in each case from a plurality of known positive and known negative tissue samples (12, 13) from the same patient from whom the unknown tissue samples for subsequent classification originate.

5. Method according to one of the preceding claims, **characterised in that**, to generate the training data and the input data, the respective tissue samples (12, 13) are detected optically and the training data and input data are analysed by means of image processing for classification by the classifier (7).

6. Method according to one of the preceding claims, **characterised in that** to generate the training data, a tissue sample from a central region of a tumour (2) is processed as the known positive tissue sample (13), a tissue sample from an environment (3) of the tumour (2) is processed as the known negative tissue sample (12) and tissue samples for which the sampling locations (17) have a shorter spatial distance to a sampling location of the known positive tissue sample (13) than a sampling location of the known negative tissue sample (12) are processed as the unknown tissue samples.

7. Method according to one of the preceding claims, **characterised in that**
- an image of the affected tissue region (2) and the environment thereof (3, 4, 18) with respective image coordinates of sampling locations (17) of the classified tissue samples is provided to an analysis device by electronic means,
- on the basis thereof, an estimated extent (19) of the affected tissue region (2) is ascertained automatically by means of the analysis device (5), and
- the estimated extent (19) is automatically visualised in the image by the analysis device (5).

8. Method according to one of the preceding claims,
**characterised in that**
by means of the analysis device, it is possible to make use of a database, in order to ascertain the suggestion for a sampling location in which, for example, typical shapes, sizes and growth directions of tumours are stored.

9. Method according to claim 8, **characterised in that** the analysis device in each case iteratively takes account of all sampling locations of the tissue samples classified up to the respective time point for the next suggestion in each case.

## Revendications

1. Procédé de classification d'échantillons tissulaires, dans lequel
- à partir d'au moins un échantillon (13) tissulaire positif connu, qui a une propriété donnée à l'avance, et d'au moins un échantillon (12) tissulaire négatif connu, qui n'a pas la propriété donnée à l'avance, on produit des données d'apprentissage annotées, dans lequel
- on met les données d'apprentissage annotées à disposition d'un classificateur (7) automatique,
- on entraîne le classificateur (7) à l'aide des données d'apprentissage annotées, pour qu'il reconnaisse si un échantillon tissulaire de ce patient a la propriété donnée à l'avance,
- pour la délimitation d'une partie (2) tissulaire concernée par la propriété donnée à l'avance et constituée de plusieurs échantillons tissulaires inconnus, dont il n'est pas connu s'ils ont la propriété donnée à l'avance, on produit des données d'entrée pour le classificateur (7),
- on classe automatiquement, en ce qui concerne la propriété donnée à l'avance, les échantillons tissulaires inconnus, à l'aide des données d'entrée au moyen du classificateur (7) ;
- on se procure, électroniquement d'un appareil (5) d'analyse, une image de la partie (2) tissulaire concernée et de ce qui l'entoure (3, 4, 18) par des coordonnées d'image respectives d'emplacements (17) de prélèvement des échantillons tissulaires classifiés, et
- en se fondant sur l'appareil (5) d'analyse, on détermine automatiquement une proposition d'un emplacement (17, 20) de prélèvement d'un autre échantillon tissulaire inconnu, pour la délimitation de la partie (2) tissulaire concernée et on l'envoie à un utilisateur,
**caractérisé**
**en ce que** les échantillons (12, 13) tissulaires positifs et négatifs, à partir desquels on produit les données d'apprentissage annotées, proviennent du même patient,
**en ce que** l'on fait subir au classificateur (7) un apprentissage spécifique à un patient pour le même patient, dont proviennent les échantillons (12, 13) tissulaires positifs et négatifs connus, et en ce que les échantillons tissulaires inconnus proviennent également du même patient, dont proviennent les échantillons (12, 13) tissulaires connus.

2. Procédé suivant la revendication 1, **caractérisé en ce que** le classificateur (7) a des paramètres adaptables, notamment un réseau neuronal, une fonction polynôme non linéaire et/ou un système de logique floue, qui sont, en fonction des données d'apprentissage, adaptés, notamment automatiquement, au traitement des données d'entrée.

3. Procédé suivant la revendication 2, **caractérisé en ce que** l'on fait subir au préalable un apprentissage aux paramètres adaptables, notamment au réseau neuronal, à la fonction polynôme non linéaire et/ou le système de logique floue, à l'aide d'une pluralité de données d'entraînement annotées d'une pluralité de patients différents et on les entraîne ensuite, à l'aide des échantillons (12, 13) tissulaires positifs et négatifs spécifiques au patient pour le patient, dont proviennent les échantillons tissulaires inconnus à classifier ensuite.

4. Procédé suivant la revendication 2, **caractérisé en ce que** l'on fait subir un apprentissage aux paramètres adaptables, notamment au réseau neuronal, à la fonction polynôme non linéaire et/ou au système de logique floue, exclusivement à l'aide de données d'apprentissage, qui ont été produites à partir de respectivement plusieurs échantillons (12, 13) tissulaires positifs connus et négatifs connus du même patient, dont proviennent également les échantillons tissulaires inconnus à classifier ensuite.

5. Procédé suivant l'une des revendications précédentes, **caractérisé en ce que**, pour la production des données d'apprentissage et des données d'entrée, on détecte optiquement les échantillons (12, 13) tissulaires respectifs et on analyse, au moyen d'un traitement d'image, les données d'apprentissage et les données d'entrée, pour la classification par le classificateur (7) .

6. Procédé suivant l'une des revendications précédentes, **caractérisé en ce que**, pour la production des données d'apprentissage, on traite un échantillon tissulaire d'une partie centrale d'une tumeur (2) comme l'échantillon (13) tissulaire positif connu, un échantillon tissulaire d'une partie (3) environnante de la tumeur (2) comme l'échantillon (12) tissulaire négatif connu et comme échantillon tissulaire inconnu, les échantillons tissulaires dont l'emplacement (17) de prélèvement a une distance dans l'espace à un emplacement de prélèvement de l'échantillon (13) tissulaire positif connu plus petite que celle à un emplacement de prélèvement de l'échantillon (12) tissulaire négatif connu.

7. Procédé suivant l'une des revendications précédentes, **caractérisé en ce que**
- on se procure, électroniquement d'un appareil d'analyse, une image de la partie (2) tissulaire concernée et de ce qui l'entoure (3, 4, 18), par des coordonnées d'image respectifs d'emplacements (17) de prélèvement des échantillons tissulaires classifiés,
- en se fondant sur cela, on détermine au moyen de l'appareil (5) d'analyse automatiquement une étendue (19) estimée de la partie (2) tissulaire concernée, et
- on visualise, dans l'image automatiquement, l'étendue (19) estimée par l'appareil (5) d'analyse.

8. Procédé suivant l'une des revendications précédentes, **caractérisé en ce que** l'on accède, pour déterminer la proposition de l'emplacement de prélèvement au moyen de l'appareil d'analyse, à une base de données, dans laquelle sont mises en mémoire, par exemple des formes, des dimensions et des directions de croissance typiques de tumeurs.

9. Procédé suivant la revendication 8, **caractérisé en ce qu'**il est pris en compte pour la proposition suivante, par l'appareil d'analyse, itérativement, respectivement tous les emplacements de prélèvements des échantillons tissulaires classifiés jusqu'à l'instant respectif.
